# EUROPÄISCHE PATENTSCHRIFT

(11) **EP 4 341 130 B1**
(45) Veröffentlichungstag und Bekanntmachung des Hinweises auf die Patenterteilung: **06.08.2025**
(21) Anmeldenummer: 22716256.7
(22) Anmeldetag: 25.03.2022
(51) Int. Cl.: B60R 13/00, B60R 13/04

(54) **KRAFTFAHRZEUGKOMPONENTE MIT ZIERELEMENT**
MOTOR VEHICLE COMPONENT HAVING A DECORATIVE ELEMENT
COMPOSANT DE VÉHICULE AUTOMOBILE COMPORTANT UN ÉLÉMENT DÉCORATIF

(30) Priorität: 17.05.2021 DE 102021204921
(43) Veröffentlichungstag der Anmeldung: 27.03.2024
(73) Patentinhaber: Stellantis Auto SAS, 78300 Poissy (FR)
(72) Erfinder: HOLDERRIED, Stefan, 65428 Rüsselsheim am Main (DE); BACH, Michael, 65428 Rüsselsheim am Main (DE); KRUG, Peter, 65428 Rüsselsheim am Main (DE)
(74) Vertreter: BCIP
(86) Internationale Anmeldenummer: PCT/EP2022/057888
(87) Internationale Veröffentlichungsnummer: WO 2022/242938

(56) Entgegenhaltungen:
- EP-A1- 3 173 291
- EP-B1- 3 303 063
- DE-A1- 102019 216 483
- DE-A1- 2 330 202
- FR-A1- 2 998 857

## Beschreibung

### Technisches Gebiet

Die vorliegende Entwicklung betrifft ein Zierelement zur Befestigung an einer am Außenbereich einer Kraftfahrzeugkarosserie anzuordnenden Kraftfahrzeugkomponente. In einem weiteren Aspekt betrifft die Entwicklung eine solche Kraftfahrzeugkomponente, eine Kraftfahrzeugkarosserie, ein Kraftfahrzeug sowie ein Verfahren zur Montage einer Kraftfahrzeugkomponente am Außenbereich einer Kraftfahrzeugkarosserie.

### Hintergrund

Die Einhaltung vorgegebener Spaltmaße ist im Karosseriebau, insbesondere im Außenbereich der Kraftfahrzeugkarosserie von besonderer Bedeutung. Eine möglichst präzise Anordnung benachbarter Kraftfahrzeugkomponenten im Außenbereich der Kraftfahrzeugkarosserie trägt zu einer optischen Aufwertung des Kraftfahrzeugs bei. Zudem nimmt die Bedeutung von Zierelementen, etwa von Zierleisten oder Chromleisten im Außenbereich des Kraftfahrzeugs zu. Die Befestigung und die wechselseitige Anordnung solcher Zierelemente, aber auch von weiteren Kraftfahrzeugkomponenten stellt den Karosseriebau vor besondere Herausforderungen.

Soll beispielsweise ein vorgegebenes Spaltmaß zwischen zwei aneinander angrenzenden Karosserie- oder Fahrzeugkomponenten verwirklicht werden, so ist es üblich, die betreffenden Kraftfahrzeugkomponenten mittels einer Montagelehre, welche als Montageschablone dient, bezüglich vorgegebener Referenzpunkte an der Kraftfahrzeugkarosserie auszurichten und in einer entsprechend ausgerichteten Position an dieser zu befestigen.

Sollen jedoch beispielsweise Kraftfahrzeugkomponenten mit besonders empfindlichen Oberflächen, wie etwa Kraftfahrzeugscheinwerfer, präzise bezüglich vorgegebener Referenzpunkte an der Kraftfahrzeugkarosserie angeordnet werden, so können gängige Montage- oder Einbaulehren nur bedingt verwendet werden, da die seitens einer Montagelehre bereitgestellten Anschlags- oder Referenzflächen unter Umständen zu Beschädigungen oder Kratzern an einer von außen sichtbaren Sichtfläche der betreffenden Kraftfahrzeugkomponente führen können. Die Montage von Kraftfahrzeugkomponenten, welche beispielsweise mit spiegelnden oder polierten Oberflächen versehen sind, eignen sich daher nur bedingt für einen herkömmlichen Einbau- und Justageprozess unter Verwendung einer Montagelehre.

Es ist ferner von Nachteil oder recht schwierig, glänzende oder verchromte Bauteile mit einem Referenzpunkt zu versehen, insbesondere falls ein solcher Referenzpunkt oder eine Anlagereferenz in der Endmontagekonfiguration des Kraftfahrzeugs von außen sichtbar sein und insoweit das äußere Erscheinungsbild stören könnte.

Aus der DE 10 2016 116 204 A1 ist beispielsweise ein Führungselement für eine Kraftfahrzeugkarosserie und ein Verfahren zur Einstellung eines Bewegungsspalts zwischen einem Rahmen der Kraftfahrzeugkarosserie und einem den Rahmen schließenden Deckel vorgesehen.

Aus dem Stand der Technik sind ferner die DE 23 30 202 A1, die DE 10 2019 216483 A1, die EP 3 173 291 A1 und die FR 2 998 857 A1 bekannt.

Die gattungsgemäße DE2330202A1 offenbart ein Zierelement zur Befestigung an einer am Außenbereich einer Kraftfahrzeugkarosserie anzuordnenden Kraftfahrzeugkomponente, wobei das Zierelement einen längserstreckten Leistenabschnitt mit einem Längsende und mit einer Außenseite aufweist, wobei die Außenseite in Montagestellung an der Kraftfahrzeugkarosserie von außen sichtbar ist und wobei das Längsende eine Stirnseite mit einem sich in Längsrichtung erstreckenden Fortsatz aufweist, welcher gegenüber der Außenseite zurückversetzt ist.

Ferner ist aus der EP 3 100 915 B1 ein flächiges Dekorelement bekannt.

Insoweit liegt der vorliegenden Weiterentwicklung die Aufgabe zugrunde, ein Zierelement für eine Kraftfahrzeugkomponente sowie eine Kraftfahrzeugkomponente bereitzustellen, die eine möglichst präzise Ausrichtung und Justage an der Kraftfahrzeugkarosserie ermöglichen und die sich insoweit für einen Montage- und Befestigungsprozess unter Nutzung einer Montagelehre eignen, ohne dass hierbei die Gefahr von Beschädigung an Sichtflächen oder Sichtbereichen der Kraftfahrzeugkomponente oder des Zierelements zu befürchten wären. Die Lösung soll sich insbesondere möglichst einfach in bestehende Montageprozesse integrieren lassen und soll ferner mit einem bestehenden Montageprozess kompatibel sein.

### Vorteilhafte Ausgestaltungen

Diese Aufgabe wird mit einem Zierelement zur Befestigung an einer am Außenbereich einer Kraftfahrzeugkarosserie anzuordnenden Kraftfahrzeugkomponente, mit einer solchen Kraftfahrzeugkomponente, mit einer Kraftfahrzeugkarosserie, ferner mit einem solchen Kraftfahrzeug sowie mit einem Verfahren zur Montage einer Kraftfahrzeugkomponente am Außenbereich einer Kraftfahrzeugkarosserie gemäß den Merkmalen der unabhängigen Patentansprüche gelöst. Vorteilhafte Ausgestaltungen sind dabei jeweils Gegenstand abhängiger Patentansprüche.

Das insoweit vorgesehene Zierelement ist zur Befestigung an einer am Außenbereich einer Kraftfahrzeugkarosserie anzuordnenden, bzw. zu befestigenden Kraftfahrzeugkomponente ausgebildet. Bevorzugt ist das Zierelement fest an der Kraftfahrzeugkomponente befestigbar, bzw. es ist fest an der Kraftfahrzeugkomponente befestigt. Das Zierelement weist einen längserstreckten Leistenabschnitt mit einem Längsende auf. Das Zierelement, mithin sein Leistenabschnitt, weist ferner eine Außenseite auf, die in Montagestellung an der Kraftfahrzeugkarosserie von außen sichtbar ist.

Die Außenseite stellt typischerweise eine Sichtfläche dar, die unter Umständen besonders kratzempfindlich ist. Das Längsende des Leistenabschnitts weist ferner eine Stirnseite auf. Die Stirnseite weist dabei einen sich in Längsrichtung des Leistenabschnitts erstreckenden Fortsatz auf, welcher gegenüber der Außenseite des Leistenabschnitts zurückversetzt ist.

Das Zierelement weist ferner einen mehrkomponentigen Körper mit einer ersten Komponente und mit einer zweiten Komponente auf. Das Zierelement kann hierbei insbesondere als Mehrkomponenten-Spritzgussbauteil ausgebildet sein. Die erste Komponente weist ein erstes Material auf. Die zweite Komponente weist ein zweites Material auf, welches sich vom ersten Material unterscheidet. Der erste Körper bildet dabei die Außenseite des Zierelements oder weist die Außenseite des Zierelements auf.

Die zweite Komponente weist den Fortsatz auf oder bildet den Fortsatz.

Der zweite Körper kann eine gegenüberliegende Rückseite des Zierelements bilden. Alternativ kann der zweite Körper auch in den ersten Körper eingebettet sein und nur bereichsweise, etwa an der Rückseite oder an einem Längsende des Zierelements von diesem hervorstehen. Bei der ersten Komponente kann es sich um ein Kunststoffmaterial handeln. Auch bei der zweiten Komponente kann es sich um ein Kunststoffmaterial handeln.

Die erste Komponente, mithin das erste Material, ist insbesondere mit einer Metallbeschichtung beschichtbar. Die zweite Komponente, bzw. das zweite Material ist für eine solche Metallbeschichtung, beispielsweise inert. Das heißt im Zuge eines gemeinsamen Beschichtungsprozesses bleibt das Beschichtungsmaterial lediglich am ersten Körper haften, während es aufgrund der unterschiedlichen Beschaffenheit von erstem und zweitem Körper nicht oder für einen dauerhaften Einsatz der Kraftfahrzeugkomponente nur ungenügend am zweiten Körper haften kann.

Hier ist beispielsweise vorgesehen, dass der Körper des Zierelements als Zweikomponenten-Spritzgussbauteil gefertigt ist. Der erste Körper, welcher beispielsweise mit einer Chrombeschichtung überzogen sein kann, weist beispielsweise einen AcrylnitrilButadien-Styrol (ABS) Kunststoff auf oder er besteht aus einem solchem. Der zweite Körper weist beispielsweise ein Polycarbonat auf. Der ABS-Kunststoffkörper ist beispielsweise mittels eines galvanischen Beschichtungsprozesses mit einem Metallüberzug, mithin mit einer Chromschicht überziehbar, während im selben Beschichtungsprozess das betreffende Material nicht oder nur in einem deutlich geringerem, aber nicht dauerhaltbaren Maße am zweiten Körper anhaftet.

Auf diese Art und Weise kann erreicht werden, dass ausschließlich der erste Körper mit einer Metallschicht überzogen ist, während der zweite Körper beschichtungsfrei ausgebildet ist oder bleibt.

Der Fortsatz ist vorzugsweise unbeschichtet, während das erste Material bzw. die erste Komponente mit einer Metallbeschichtung überzogen sein kann.

Jene Ausgestaltung ist insbesondere von Vorteil, als dass der unbeschichtete Fortsatz lediglich als Anlagereferenz für die Justage und Montage der Kraftfahrzeugkomponente dient, wobei aufgrund des von der Stirnseite hervorstehenden Fortsatzes eine Beschädigung oder ein Verkratzen der Außenseite der ersten Komponente des Zierelements nicht zu befürchten ist. Die gegenüber der Außenseite zurückversetzte Anordnung des Fortsatzes sowie die unbeschichtete Ausgestaltung des Fortsatzes ist im Endmontagezustand der Kraftfahrzeugkomponente insoweit von Vorteil, als dass der ohnehin aufgrund seiner zurückversetzten Anordnung versteckte oder kaschierte Fortsatz nicht glänzend ist und dass ausschließlich die als Sichtfläche fungierende Außenseite der ersten Komponente von außen sichtbar ist.

Der Fortsatz ist an der Stirnseite angeordnet und/oder er ist einstückig mit dieser verbunden. Der Fortsatz kann sich insbesondere in Längsrichtung des Leistenabschnitts von der Stirnseite weg erstrecken.

Der Fortsatz fungiert insbesondere als Anlagepunkt oder Anlagefläche zur Montage des Zierelements, und insbesondere zur Montage und zur Ausrichtung einer fest mit dem Zierelement verbundenen Kraftfahrzeugkomponente. Anhand des gegenüber der Außenseite, mithin gegenüber der Sichtfläche zurückversetzten Fortsatzes kann eine bestimmungsgemäße Ausrichtung des Zierelements und der hiermit verbundenen Kraftfahrzeugkomponente an der Kraftfahrzeugkarosserie im Montageprozess der Kraftfahrzeugkomponente erfolgen.

Der sich von der Stirnseite weg erstreckende Fortsatz befindet sich versetzt zur Außenseite des Leistenabschnitts. Er ist typischerweise in der Endmontagestellung des Zierelements, bzw. der Kraftfahrzeugkomponente an der Kraftfahrzeugkarosserie von außen nicht sichtbar. Er erfüllt primär die Funktion einer Anlagereferenz, um das Zierelement und die ggf. die hiermit verbundene Kraftfahrzeugkomponente mittels einer Montagelehre bestimmungsgemäß gegenüber vorgegebenen Referenzpunkten an der Kraftfahrzeugkarosserie anzuordnen und auszurichten. Der Fortsatz kann eine gegenüber der Außenseite des Leistenabschnitts gänzlich andere Oberflächenkontur oder Oberflächenbeschaffenheit aufweisen.

Während die von außen sichtbare Außenseite des Zierelements beispielsweise als Sichtfläche ausgebildet ist, muss dies für den Fortsatz nicht zutreffen. Farbgebung und Textur sowie Oberflächenbeschaffenheit des Fortsatzes kann sich von der Farbe, der Textur und der Oberflächenbeschaffenheit der Außenseite unterscheiden. Auf diese Art und Weise kann der Fortsatz in einer Endmontagestellung an der Kraftfahrzeugkarosserie beispielsweise bereits aufgrund seiner Farbgebung kaschiert werden, sodass er vom Endanwender von außen kaum wahrnehmbar oder sichtbar ist.

Zudem kann vorgesehen werden, dass der Fortsatz von einer angrenzenden weiteren Kraftfahrzeugkomponente verdeckt wird, sodass dieser nach erfolgter Montage zweier aneinander angrenzender Kraftfahrzeugkomponenten von außen nicht mehr sichtbar ist.

Nach einer weiteren Ausgestaltung steht der Fortsatz in Längsrichtung des Leistenabschnitts von der Stirnseite des Längsendes des Leistenabschnitts hervor. Der hervortretende Fortsatz kann insbesondere als Anlagereferenz fungieren. Indem der Fortsatz von der Stirnseite des Leistenabschnitts hervorsteht, ermöglicht er insbesondere eine Justage des Zierelements und der ggf. hiermit fest verbundenen Kraftfahrzeugkomponente in Längsrichtung des Leistenabschnitts. So kann beispielsweise ein freies Ende des Fortsatzes, welches von der Stirnseite hervorsteht und insoweit auch beabstandet von der Stirnseite zu liegen kommt, als Anlagereferenz oder als Anlagefläche fungieren und insoweit mit einem Positionieranschlag einer Montagelehre in Anlagestellung gelangen.

In einer solchen Anlagestellung kann die Außenseite des Leistenabschnitts als auch die Stirnseite des Leistenabschnitts beabstandet vom Positionsanschlag zu liegen kommen, sodass Beschädigungen infolge eines mechanischen Anschlags an der Außenseite als auch an der Stirnseite des Leistenabschnitts nicht zu befürchten sind.

Nach einer weiteren Ausgestaltung des Zierelements erstreckt sich der Fortsatz in einem vorgegebenen Abstand zur Außenseite des Leistenabschnitts. Bezogen auf die spätere Einbaulage am Kraftfahrzeug befindet sich der Fortsatz gegenüber der Außenseite des Leistenabschnitts zurückversetzt. Er liegt insoweit etwas innerhalb von der Außenhaut des Kraftfahrzeugs, welche mit der Außenseite des Leistenabschnitts zusammenfallen kann. Jene leicht zurückversetzte Anordnung des Fortsatzes ermöglicht eine kaschierte, bzw. verdeckte Implementierung des Fortsatzes, sodass dieser gar nicht oder nur kaum von außen wahrnehmbar ist.

Nach einer weiteren Ausgestaltung weist der Fortsatz an seinem der Stirnseite des Leistenabschnitts abgewandten Ende eine als Anlagereferenz fungierende Stirnfläche auf. Jene Stirnfläche kann abgeplattet oder abgeflacht ausgestaltet sein, um eine möglichst präzise oder vollflächige Anlagestellung mit einem Positionieranschlag einer Einbau- oder Montagelehre bereitzustellen. Im Zuge der Montage der Kraftfahrzeugkomponente, welche von Vorteil mit dem Zierelement vorkonfiguriert ist, kann insbesondere vorgesehen werden, den Fortsatz des Zierelements, insbesondere dessen Stirnfläche, mit einem Positionieranschlag einer Montagelehre in Anlagestellung zu bringen, um insoweit eine Montageposition bezüglich zumindest eines Bewegungsfreiheitsgrads für das Zierelement und damit auch für die Kraftfahrzeugkomponente festzulegen.

Nach einer weiteren Ausgestaltung ist das Zierelement ein Kunststoff-Spritzgussbauteil oder es weist ein solches Kunststoff-Spritzgussbauteil auf. Das Zierelement kann als einteiliges oder als mehrteiliges, etwa als Zwei-Komponenten-Spritzgussbauteil ausgebildet sein. Die Ausbildung als Kunststoff-Spritzgussbauteil ermöglicht eine kostengünstige sowie präzise Massenfertigung des Zierelements. Zudem kann durch die Kunststoffausbildung des Zierelements gegenüber einer Metallkomponente Gewicht eingespart werden.

Nach einer weiteren Ausgestaltung ist die Außenseite des Zierelements oder des Leistenabschnitts zumindest abschnittsweise mit einer Beschichtung versehen. Es kann sich hierbei um eine Metallbeschichtung oder eine metallisch anmutende Beschichtung handeln. Beispielsweise kann das Zierelement mit einer Chrombeschichtung überzogen sein, um dem Zierelement ein metallisch glänzendes Erscheinungsbild zu verleihen.

Nach einem weiteren Aspekt betrifft die vorliegende Entwicklung schließlich eine Kraftfahrzeugkomponente zur Anordnung und Befestigung am Außenbereich einer Kraftfahrzeugkarosserie. Die Kraftfahrzeugkomponente weist zumindest ein zuvor beschriebenes Zierelement auf. Die Kraftfahrzeugkomponente ist mittels des Fortsatzes des Zierelements zumindest in Längsrichtung des Leistenabschnitts des Zierelements bezüglich einer Referenz der Kraftfahrzeugkarosserie ausrichtbar, justierbar und/oder positionierbar. Das Zierelement ist dabei fest in einer definierten Lage an der Kraftfahrzeugkomponente befestigt. Das Zierelement kann formschlüssig oder kraftschlüssig mit der Kraftfahrzeugkomponente verbunden sein. Das Zierelement kann insbesondere mit der Kraftfahrzeugkomponente dauerhaft und unlösbar verklebt sein.

Nach einer weiteren Ausgestaltung ist die Kraftfahrzeugkomponente als Fahrzeugscheinwerfer, etwa als Frontscheinwerfer ausgebildet. Das Zierelement ist dabei unlösbar, entweder an einem Scheinwerfergehäuse oder an einem Scheinwerferglas angeordnet und/oder fixiert. Die unmittelbare Befestigung des Zierelements am Scheinwerferglas oder am Scheinwerfergehäuse ermöglicht eine besonders toleranzarme Justage und Montage des Fahrzeugscheinwerfers an der Kraftfahrzeugkarosserie, wobei der Fahrzeugscheinwerfer mittels des am Zierelement ausgestalteten Fortsatzes an einer Einbau- oder Montagelehre zur Anlage kommt, um so die Position des Scheinwerfers zumindest in Bezug auf die Längsrichtung des Leistenabschnitts relativ zu vorgegebenen Referenzpunkten der Kraftfahrzeugkarosserie festzulegen und zu fixieren.

Nach einem weiteren Aspekt betrifft die vorliegende Entwicklung eine Kraftfahrzeugkarosserie mit einer ersten zuvor beschriebenen Kraftfahrzeugkomponente und mit einer zweiten Kraftfahrzeugkomponente. Die zweite Kraftfahrzeugkomponente ist angrenzend an das Längsende des Leistenabschnitts des Zierelements der ersten Kraftfahrzeugkomponente angeordnet oder ist hieran anordenbar. In Endmontagestellung an der Kraftfahrzeugkarosserie wird hierbei das freie Ende des Fortsatzes des Zierelements der ersten Kraftfahrzeugkomponente von der zweiten Kraftfahrzeugkomponente nach außen hin verdeckt. Die zweite Kraftfahrzeugkomponente kann insbesondere den Fortsatz zumindest partiell verdecken oder überdecken, sodass der Fortsatz von außen gar nicht oder kaum wahrnehmbar ist. Bei der zweiten Kraftfahrzeugkomponente kann es sich beispielsweise um ein Verkleidungsbauteil handeln, welches benachbart zum Scheinwerfergehäuse, etwa bezogen auf die Kraftfahrzeugquerrichtung (y), nach innen versetzt an den Scheinwerfer angrenzt. Die zweite Kraftfahrzeugkomponente kann insbesondere annähernd bündig an ein Scheinwerferglas eines heck- oder frontseitigen Scheinwerfers angrenzen.

Nach einer weiteren Ausgestaltung weist die zweite Kraftfahrzeugkomponente ein Zierelement auf, welches fluchtend zum Längsende des Leistenabschnitts des Zierelements der ersten Kraftfahrzeugkomponente angeordnet ist. Das Zierelement der zweiten Kraftfahrzeugkomponente kann insoweit als visueller Fortsatz des Zierelements der ersten Kraftfahrzeugkomponente fungieren. Es kann sich quasi in Längsrichtung bündig und unter Einhaltung eines vorgegebenen Spaltmaßes an das Längsende des Zierelements der ersten Kraftfahrzeugkomponente anschließen.

Nach einer weiteren Ausgestaltung der Kraftfahrzeugkarosserie weist die zweite Kraftfahrzeugkomponente oder deren Zierelement eine Aufnahme für den Fortsatz des Zierelements der ersten Kraftfahrzeugkomponente auf. Hier kann beispielsweise eine endseitige Stirnfläche an dem der ersten Kraftfahrzeugkomponente zugewandten Ende des Zierelements der zweiten Kraftfahrzeugkomponente eine Aufnahme in einer Stirnwand oder Stirnfläche aufweisen, welche korrespondierend oder komplementär zur Querschnittsgeometrie des Fortsatzes ausgebildet ist. Im Montageprozess und typischerweise nachdem die erste Kraftfahrzeugkomponente beispielsweise an einem hierfür vorgesehenen Träger der Kraftfahrzeugkarosserie befestigt ist, kann die zweite Kraftfahrzeugkomponente an demselben oder an einem weiteren Träger befestigt werden, sodass der Fortsatz des Zierelements der ersten Kraftfahrzeugkomponente in der Aufnahme der zweiten Kraftfahrzeugkomponente oder deren Zierelement aufgenommen wird.

Nach einem weiteren Aspekt betrifft die vorliegende Entwicklung ferner ein Kraftfahrzeug, insbesondere einen Personenkraftwagen mit einer zuvor beschriebenen Kraftfahrzeugkarosserie und/oder mit einer zuvor beschriebenen Kraftfahrzeugkomponente sowie mit einem zuvor beschriebenen Zierelement. Die Kraftfahrzeugkomponente kann als Scheinwerfer, insbesondere als Frontscheinwerfer ausgestaltet sein. Sie kann aber auch als Rückleuchte oder auch als jedwedes anderes im Außenbereich der Kraftfahrzeugkarosserie vorzusehendes Karosseriebauteil ausgestaltet sein.

Nach einem weiteren Aspekt betrifft die vorliegende Entwicklung schließlich ein Verfahren zur Montage einer Kraftfahrzeugkomponente am Außenbereich einer Kraftfahrzeugkarosserie. Das Verfahren ist durch das Bereitstellen zumindest einer ersten zuvor beschriebenen Kraftfahrzeugkomponente gekennzeichnet. In einem weiteren Schritt wird die Kraftfahrzeugkomponente an der Kraftfahrzeugkarosserie mittels einer Montagelehre und unter Verwendung des zuvor beschriebenen Fortsatzes des Zierelements als Anlagereferenz ausgerichtet. Der Fortsatz des Zierelements gelangt hierbei in Anlagestellung mit einem Positionsanschlag der Montagelehre. Danach wird in einem weiteren Schritt die Kraftfahrzeugkomponente an der Kraftfahrzeugkarosserie mittels eines Befestigungselements, beispielsweise mittels einer Schraube, befestigt.

Das Verfahren kennzeichnet die bestimmungsgemäße Verwendung des zuvor beschriebenen Zierelements und der zuvor beschriebenen, mit dem Zierelement ausgestatteten Kraftfahrzeugkomponente zur Bildung einer zuvor beschriebenen Kraftfahrzeugkarosserie. Insoweit gelten sämtliche Merkmale, Eigenschaften und Wirkungen, die zuvor im Hinblick auf das Zierelement und/oder die Kraftfahrzeugkomponente beschrieben wurden, auch gleichermaßen für das Verfahren; und umgekehrt.

Nach einer weiteren Ausgestaltung des Verfahrens ist vorgesehen, eine zweite Kraftfahrzeugkomponente, insbesondere eine Außenkarosseriekomponente oder Außenverkleidungskomponente angrenzend an die Kraftfahrzeugkomponente anzuordnen und an der Kraftfahrzeugkarosserie zu befestigen, wobei zumindest ein Teilbereich des Fortsatzes des Zierelements der ersten Kraftfahrzeugkomponente durch die zweite Kraftfahrzeugkomponente verdeckt oder überdeckt wird.

Der Fortsatz, welcher insbesondere als Anlagereferenz für die Ausrichtung der ersten Kraftfahrzeugkomponente dient, ist alsdann kaschiert und kann von außen kaum oder gar nicht mehr wahrgenommen werden.

### Kurzbeschreibung der Figuren

Weitere Ziele, Merkmale sowie vorteilhafte Ausgestaltungen der vorliegenden Entwicklung werden in der nachfolgenden Beschreibung eines Ausführungsbeispiels erläutert. Hierbei zeigen:
- Fig. 1: eine schematische Seitenansicht eines Kraftfahrzeugs,
- Fig. 2: eine schematische Darstellung eines Montageträgers zur Befestigung von Fahrzeugscheinwerfern und einer Frontblende,
- Fig. 3: eine Darstellung gemäß Fig. 2, jedoch mit an dem Träger angeordneten und bezüglich der Montagelehre ausgerichteten Frontscheinwerfern,
- Fig. 4: die Darstellung gemäß Fig. 3, jedoch mit Befestigungselementen zur Fixierung der Fahrzeugscheinwerfer,
- Fig. 5: eine Endmontagekonfiguration nach Entfernen der Montagelehre und nach einer Montage und/oder Fixierung eines zweiten Karosseriebauteils angrenzend an das erste Karosseriebauteil,
- Fig. 6: eine vergrößerte schematische Darstellung eines Teilbereichs der mit einem Zierelement versehenen Kraftfahrzeugkomponente,
- Fig. 7: eine vergrößerte Darstellung des Übergangsbereichs zwischen der ersten Kraftfahrzeugkomponente und der hieran angrenzend angeordneten zweiten Kraftfahrzeugkomponente,
- Fig. 8: perspektivische Darstellungen der aneinander angrenzenden Längsenden der Zierelemente von erster und zweiter Kraftfahrzeugkomponente und
- Fig. 9: ein Flussdiagramm des Verfahrens zur Montage der Kraftfahrzeugkomponenten.

### Detaillierte Beschreibung

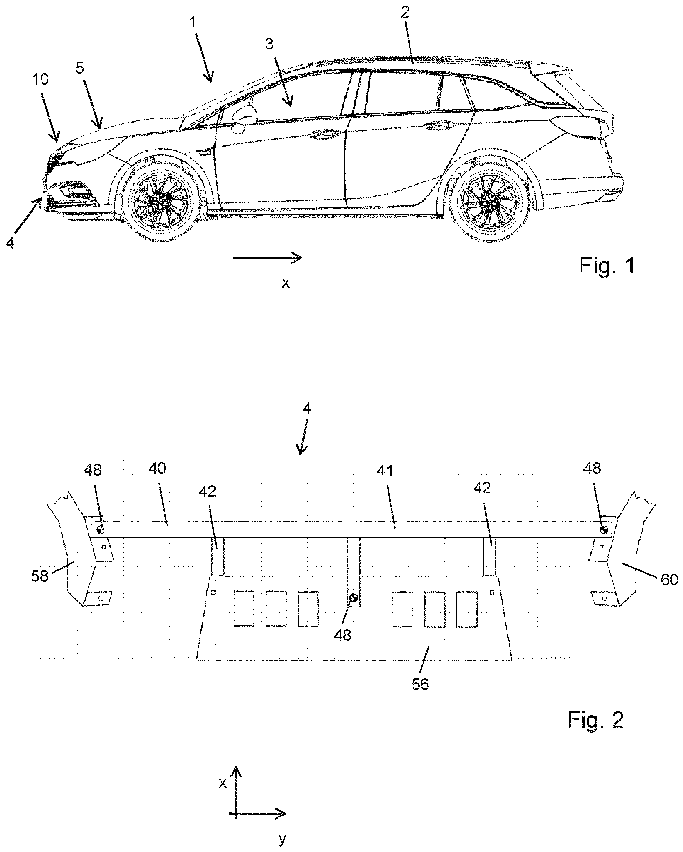

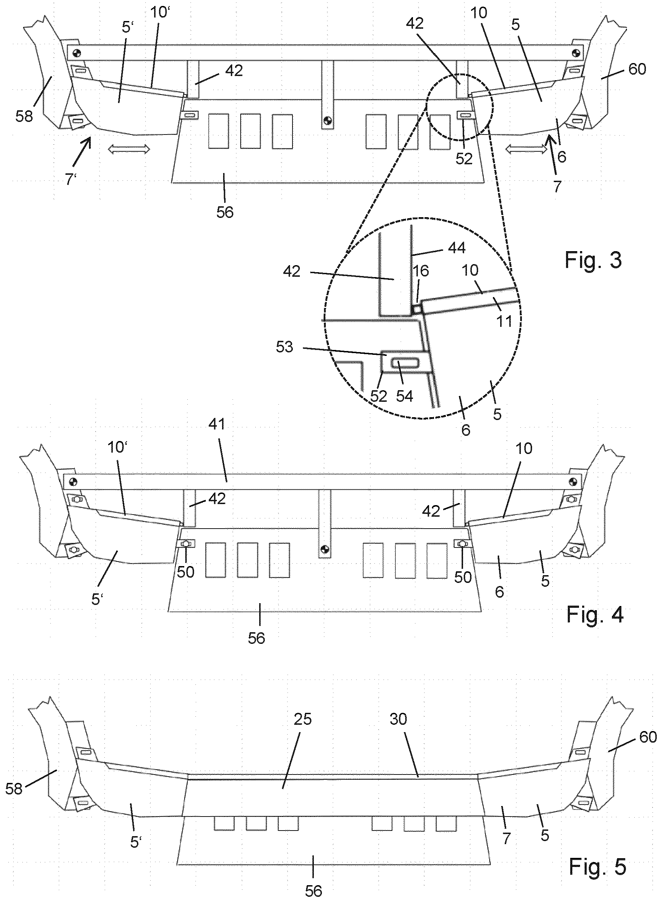

Das in Fig. 1 schematisch gezeigte Kraftfahrzeug 1 weist eine Kraftfahrzeugkarosserie 2 mit einem als Fahrgastzelle fungierenden Innenraum 3 auf. Das Kraftfahrzeug weist eine Fahrzeugfront 4 auf, die in Fahrtrichtung des Kraftfahrzeugs 1 ausgerichtet ist. An der Fahrzeugfront sind mehrere Kraftfahrzeugkomponenten 5, 25 angeordnet. Bei der Kraftfahrzeugkomponente 5, 5' handelt es sich beispielsweise um frontseitige Fahrzeugscheinwerfer. Bei der Kraftfahrzeugkomponente 25 handelt es sich beispielsweise um eine Blende, die zwischen den an den Außenseiten der Kraftfahrzeugkarosserie 2 angeordneten linken und rechten Schweinwerfern angeordnet ist, wie dies beispielsweise aus der schematischen Darstellung der Fig. 5 hervorgeht.

Die erste Kraftfahrzeugkomponente 5, 5' ist insbesondere als Fahrzeugscheinwerfer 6 mit einem Scheinwerfergehäuse 7 und mit einem Scheinwerferglas 8 ausgebildet. Das Zierelement 10 kann an einer Außenseite des Scheinwerfergehäuses 7 und/oder an einer Außenseite des Scheinwerferglases 8 fest angeordnet sein. Beispielsweise kann das Zierelement 10 unmittelbar am Scheinwerfergehäuse 7 oder am Scheinwerferglas 8 klebend und/oder unlösbar angeordnet sein.

Zur Montage und Befestigung der Kraftfahrzeugkomponenten 5, 5', 25 ist an der Fahrzeugfront 4 zumindest ein Träger 56 angeordnet. Der Träger 56 ist mit tragenden Strukturbauteilen der Kraftfahrzeugkarosserie 2 fest verbunden. Die Kraftfahrzeugkarosserie 2 weist ferner einen linken und einen rechten Kotflügel 60, 58 auf, die in den Fig. 2 bis 5 angedeutet sind. An den Kotflügeln 58, 60, mithin auch an anderen definierten Stellen der Kraftfahrzeugkarosserie 2 sind Positionsreferenzen 48 vorgesehen. An diesen Referenzen 48 kann eine Montagelehre 40, wie in den Fig. 2 bis 4 gezeigt, angeordnet werden, um eine definierte und referenzierte Anordnung weiterer Kraftfahrzeugkomponenten 5, 25 im Bereich der Fahrzeugfront 4 unter Einhaltung vorgegebener Spaltmaße zu ermöglichen.

Es ist insbesondere Zielsetzung, einen in der Endmontagekonfiguration von außen sichtbaren Spalt zwischen den Kraftfahrzeugkomponenten 5, 5' und der Kraftfahrzeugkomponente 25 zu gewährleisten. Im vorliegenden Ausführungsbeispiel sind beide Kraftfahrzeugkomponenten, nämlich eine erste Kraftfahrzeugkomponente 5 und eine zweite Kraftfahrzeugkomponente 25 jeweils mit einem Zierelement 10, 30 versehen. Das Zierelement 10, 30 ist dabei jeweils als Zierleiste ausgestaltet oder weist einen dementsprechenden Leistenabschnitt 11, 31 auf.

Für eine positionsgetreue und besonders maßhaltige Anordnung und Befestigung der ersten Kraftfahrzeugkomponenten 5, 5' weist die Montagelehre 40 für jede der Kraftfahrzeugkomponenten 5, 5' einen gesonderten Positionierstift 42 auf, welcher von einem Querträger 41 der Montagelehre 40 abragt. Die Positionierstifte 42 weisen im vorliegenden Ausführungsbeispiel einen der jeweiligen Kraftfahrzeugkomponente 5, 5' zugewandten Positionieranschlag 44 auf.

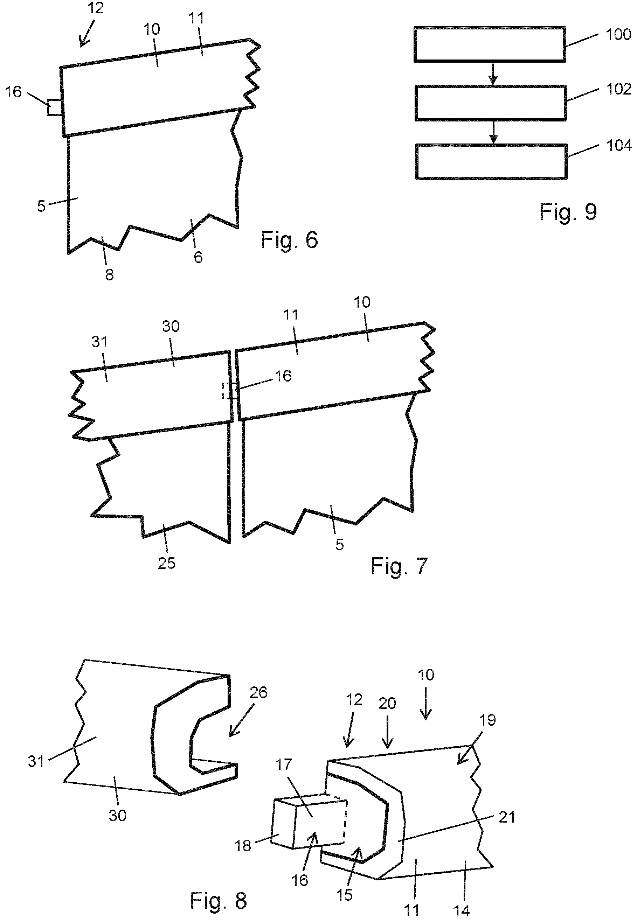

Für die maßhaltige Anordnung und Fixierung der Kraftfahrzeugkomponenten 5, 5' an der Kraftfahrzeugfront 4 weisen die ersten Kraftfahrzeugkomponenten 5, 5' an einem in Fig. 8 detailliert gezeigten Längsende 12 ihres Zierelements 10 einen Fortsatz 16 auf. Der Fortsatz 16 ragt von einer Stirnseite 15 des Längsendes 12 des Leistenabschnitts 11 des Zierelements 10 in Längsrichtung des Zierelements 10 ab. Der Fortsatz 16 ist dabei gegenüber einer Außenseite des Leistenabschnitts 11 zurückversetzt. Bezogen auf die spätere Montageposition am Kraftfahrzeug ist der Fortsatz 16 entgegen der Fahrtrichtung oder entlang der Fahrzeuglängsachse (x) von der Außenseite 14 des Leistenabschnitts 11 zurückversetzt.

Der Fortsatz 16 weist eine oder mehrere Seitenwangen 17 auf und weist an seinem der Stirnseite 15 des Leistenabschnitts 11 abgewandten Ende eine Stirnfläche 18 auf. Diese Stirnfläche 18 fungiert als Anlagereferenz und dient der positionsgetreuen Montage der Kraftfahrzeugkomponente 5 an der Kraftfahrzeugkarosserie 2. Wie in dem vergrößerten Ausschnitt gemäß Fig. 3 dargestellt, gelangt der Fortsatz 16 mit seiner Stirnfläche 18 in unmittelbare Anlagestellung mit dem Positionieranschlag 44 der Montagelehre 40, insbesondere mit dem Positionieranschlag 44 des Positionierstiftes 42 unmittelbar zur Anlage. Auf diese Art und Weise kann die Position der Kraftfahrzeugkomponente 5, 5' entlang der Fahrzeugquerrichtung (y), mithin entlang der Längsrichtung des Zierelements 10 präzise eingestellt und somit die Kraftfahrzeugkomponente 5 unter Einhaltung vorgegebener Spaltmaße an der Fahrzeugfront positioniert und fixiert werden.

Für die Fixierung und Befestigung der Kraftfahrzeugkomponente 5 am Träger 56 ist eine Kombination von einem Schraubloch und einem Langloch 54 vorgesehen. So weist der Träger 56 eine Gegenbefestigungsstelle für ein Befestigungselement 50 auf, welches beispielsweise als Schraube ausgebildet ist. Das Befestigungselement 50 durchsetzt das Langloch 54 einer von der Kraftfahrzeugkomponente 5 abragenden Lasche 53. Das Langloch 54 der Montagelasche 53 erstreckt sich in etwa in Längsrichtung des Leistenabschnitts 11. Es bildet eine Befestigungsstelle 52 für die Kraftfahrzeugkomponente 5, 5'. Das Langloch 54 ermöglicht insoweit eine stufenlose Ausrichtung und Fixierung der Kraftfahrzeugkomponente 5, 5' am Träger 56.

Nach erfolgter Montage der Kraftfahrzeugkomponenten 5, 5', wie dies beispielsweise in Fig. 4 dargestellt ist, kann die Montagelehre 40 entfernt und im Zwischenraum zwischen den gegenüberliegenden ersten Kraftfahrzeugkomponenten 5, 5' kann die zweite Kraftfahrzeugkomponente 25 beispielsweise am Träger 56 positioniert und arretiert werden. Hierbei ist vorgesehen, dass die zweite Kraftfahrzeugkomponente 25 den Fortsatz 16, welcher vom Längsende 12 des Zierelements 10 in Längsrichtung absteht oder hervorsteht, zumindest bereichsweise von der zweiten Kraftfahrzeugkomponente 25 überdeckt wird.

Insbesondere ist vorgesehen, dass die zweite Kraftfahrzeugkomponente 25 hierfür eine Ausnehmung oder Aufnahme 26 aufweist, die komplementär zur geometrischen Ausgestaltung des Fortsatzes 16 ausgebildet ist. Die Aufnahme 26 kann beispielsweise in der Rückseite des Zierelements 30 ausgebildet sein. In der Endmontagestellung, die in Fig. 7 ausschnittsweise vergrößert dargestellt ist, wird zumindest das freie Ende des Fortsatzes 16 vollständig vom Zierelement 30 der zweiten Kraftfahrzeugkomponente 25 überdeckt. Dadurch, dass der Fortsatz 16 gegenüber der Außenseite 14 zurückversetzt am Zierelement 10 ausgebildet ist, kann er kaum von außen wahrgenommen werden.

Zudem ist vorgesehen, das Zierelement 10 als Mehrkomponenten-Kunststoff-Spritzgussbauteil auszubilden. Das Zierelement 10 weist insoweit einen mehrkomponentigen, insbesondere zweikomponentigen Körper 20 mit einer ersten Komponente 21 und mit einer zweiten Komponente 22 auf. Die erste Komponente 21 ist aus einem ersten Kunststoffmaterial gebildet oder weist ein erstes Kunststoffmaterial auf. Die zweite Komponente 22 ist aus einem zweiten Kunststoffmaterial gebildet oder weist ein zweites Kunststoffmaterial auf. Das erste und das zweite Kunststoffmaterial sind unterschiedliche Kunststoffmaterialien. Bei dem ersten Kunststoffmaterial kann es sich beispielsweise um ein ABS-Kunststoffmaterial handeln.

Das zweite Kunststoffmaterial weist beispielsweise ein Polycarbonat auf. Die erste Komponente 21 bildet insbesondere die spätere Sichtfläche oder Außenseite 14 des Zierelements 10. Diese kann beispielsweise mittels eines galvanischen Beschichtungsprozesses mit einer Metallschicht überzogen oder beschichtet sein. Insbesondere kann die Beschichtung 19 eine Chrombeschichtung sein. Das zweite Kunststoffmaterial, mithin die zweite Komponenter 22, kann für einen solchen Beschichtungsprozess im Wesentlichen inert sein. Der Fortsatz 16 kann ausschließlich in der zweiten Komponente 22 ausgebildet sein und insoweit aus dem zweiten Kunststoffmaterial bestehen oder das zweite Kunststoffmaterial aufweisen.

Für das zweite Kunststoffmaterial wird insbesondere ein Material gewählt, welches während des sich an den Spritzgussprozess anschließenden Beschichtungsverfahrens nicht beschichtet wird. Die Materialwahl erfolgt dergestalt, dass im Beschichtungsprozess des zweikomponentigen Körpers 20 ausschließlich die Oberfläche der ersten Komponente 21 eine effektive Beschichtung erfährt. Auf diese Art und Weise ist es möglich, dass beispielsweise die zweite Komponente 22 eine dunkle Farbgebung erhält, während die erste Komponente 21 zumindest an ihrer Außenseite 14 eine metallisch glänzende Oberfläche erhält. Jener farbliche Kontrast trägt ferner zu einem Kaschieren des ohnehin gegenüber der Außenseite 14 zurückversetzten Fortsatzes 16 in der Endmontagestellung am Kraftfahrzeug bei, sodass dieser zusätzlich zu seiner zumindest partiellen Verdeckung durch das zweite Kraftfahrzeugbauteil 25, sondern auch durch seine dunkle Farbgebung im verbleibenden Spalt zwischen den Leistenabschnitten 11, 31 kaum mehr wahrnehmbar ist.

Auch das weitere Zierelement 30, insbesondere dessen Leistenabschnitt 31, kann mit einer Beschichtung versehen sein, die der Beschichtung 19 des sich in Längsrichtung hieran angrenzenden Leistenabschnitts 11 entspricht.

Der Fortsatz 16 kann ferner für die wechselseitige Montage und besonders maßhaltige Anordnung der aneinander angrenzenden Leistenabschnitte 11, 31 von Vorteil sein. So kann beispielsweise die an der Rückseite des Zierelements 30 vorgesehene Aufnahme 26 passgenau an die Geometrie des Querschnitts des Fortsatzes 16 angepasst sein, sodass mittels des wechselseitigen Eingriffs von Fortsatz 16 und Aufnahme 26 das Zierelement 30 besonders maßhaltig, insbesondere im Hinblick auf eine Positionierung entlang der Fahrzeughochachse (z) und/oder entlang der Fahrzeuglängsachse (x) zum Zierelement 10 erfolgen kann.

In Fig. 9 ist schließlich ein Flussdiagramm zur Darstellung eines Montageverfahrens unter Verwendung des hier beschriebenen Zierelements 10 und unter Verwendung der hier beschriebenen Kraftfahrzeugkomponenten 5, 25 gezeigt. In einem ersten Schritt 100 wird die zuvor beschriebene Kraftfahrzeugkomponente 5, etwa in Form des Scheinwerfers 6 bereitgestellt. Die Kraftfahrzeugkomponente 5 ist mit einem zuvor beschriebenen Zierelement 10 versehen, welches typischerweise fest an der betreffenden Kraftfahrzeugkomponente 5 angeordnet ist. In einem nachfolgenden Schritt 102 erfolgt ein Ausrichten der Kraftfahrzeugkomponente an der Kraftfahrzeugkarosserie 2 mittels einer Montagelehre 40 und unter Verwendung des Fortsatzes 16 des Zierelements 30 als Anlagereferenz.

Hierbei wird der Fortsatz 16, insbesondere mit seiner Stirnfläche 18 an dem Positionierstift 42 der Montagelehre 40 zur Anlage gebracht. Auf diese Art und Weise kann, wie im vorliegenden Ausführungsbeispiel gezeigt, die Kraftfahrzeugkomponente 5 bezüglich der Fahrzeugquerrichtung (y) ausgerichtet werden. Anschließend und im Schritt 104 wird die Kraftfahrzeugkomponente 5 in der ausgerichteten Position mittels eines Befestigungselements 50, typischerweise auch mit mehreren Befestigungselementen an der Kraftfahrzeugkarosserie 2, beispielsweise an einem hieran vorgesehenen Träger 56 fixiert.

Die dargestellten Ausführungsformen zeigen lediglich mögliche Ausgestaltungen der Entwicklung, zu welcher im Rahmen der Entwicklung weitere zahlreiche Varianten denkbar sind. Die exemplarisch gezeigten Ausführungsbeispiele sind in keiner Weise hinsichtlich des Umfangs, der Anwendbarkeit oder der Konfigurationsmöglichkeiten der Entwicklung als einschränkend auszulegen. Die vorliegende Beschreibung zeigt dem Fachmann lediglich eine oder einige mögliche Implementierung(en) eines Ausführungsbeispiels auf. So können an der Funktion und Anordnung von beschriebenen Elementen vielfältigste Modifikationen vorgenommen werden, ohne hierbei den durch die nachfolgenden Ansprüche definierten Schutzbereich oder dessen Äquivalente zu verlassen.

### Bezugszeichenliste

- 1: Kraftfahrzeug
- 2: Kraftfahrzeugkarosserie
- 3: Innenraum
- 4: Fahrzeugfront
- 5: Kraftfahrzeugkomponente
- 6: Fahrzeugscheinwerfer
- 7: Scheinwerfergehäuse
- 8: Scheinwerferglas
- 10: Zierelement
- 11: Leistenabschnitt
- 12: Längsende
- 14: Außenseite
- 15: Stirnseite
- 16: Fortsatz
- 17: Wange
- 18: Stirnfläche
- 19: Beschichtung
- 20: Clipkörper
- 21: Komponente
- 22: Komponente
- 25: Kraftfahrzeugkomponente
- 26: Aufnahme
- 30: Zierelement
- 31: Leistenabschnitt
- 40: Montagelehre
- 41: Querträger
- 42: Positionierstift
- 44: Positionieranschlag
- 48: Referenz
- 50: Befestigungselement
- 52: Befestigungsstelle
- 53: Lasche
- 54: Langloch
- 56: Träger
- 58: Kotflügel
- 60: Kotflügel

## Patentansprüche

1. Zierelement (10) zur Befestigung an einer am Außenbereich einer Kraftfahrzeugkarosserie (2) anzuordnenden Kraftfahrzeugkomponente (5), wobei das Zierelement (10) einen längserstreckten Leistenabschnitt (11) mit einem Längsende (12) und mit einer Außenseite (14) aufweist, wobei die Außenseite (14) in Montagestellung an der Kraftfahrzeugkarosserie (2) von außen sichtbar ist und wobei das Längsende (12) eine Stirnseite (15) mit einem sich in Längsrichtung erstreckenden Fortsatz (16) aufweist, welcher gegenüber der Außenseite (14) zurückversetzt ist, **dadurch gekennzeichnet, dass** das Zierelement (10) einen mehrkomponentigen Körper (20) mit einer ersten Komponente (21) und mit einer zweiten Komponente (22) aufweist, wobei die erste Komponente (21) ein erstes Material aufweist und die zweite Komponente (22) ein zweites Material aufweist, welches sich vom ersten Material unterscheidet und wobei die erste Komponente (21) die Außenseite (14) des Zierelements (10) bildet oder aufweist, wobei die zweite Komponente (22) den Fortsatz (16) aufweist oder bildet.

2. Zierelement (10) nach Anspruch 1, wobei der Fortsatz (16) in Längsrichtung des Leistenabschnitts (11) von der Stirnseite (15) hervorsteht.

3. Zierelement (10) nach einem der vorhergehenden Ansprüche, wobei sich der Fortsatz (16) in einem vorgegebenen Abstand zur Außenseite (14) des Leistenabschnitts (11) erstreckt.

4. Zierelement (10) nach einem der vorhergehenden Ansprüche, wobei der Fortsatz (16) an seinem der Stirnseite (15) des Leistenabschnitts (11) abgewandten Ende eine als Anlagereferenz fungierende Stirnfläche (18) aufweist.

5. Zierelement (10) nach einem der vorhergehenden Ansprüche, wobei das Zierelement (10) ein Kunststoff-Spritzgussbauteil aufweist oder als Kunststoff-Spritzgussbauteil ausgebildet ist.

6. Zierelement (10) nach einem der vorhergehenden Ansprüche, wobei die Außenseite (14) des Zierelements (10) oder des Leistenabschnitts (11) mit einer Beschichtung (19) versehen ist.

7. Zierelement (10) nach einem der vorhergehenden Ansprüche, wobei der Fortsatz (16) unbeschichtet ist.

8. Kraftfahrzeugkomponente (5) zur Anordnung und Befestigung am Außenbereich einer Kraftfahrzeugkarosserie (2), welche zumindest ein Zierelement (10) nach einem der vorhergehenden Ansprüche aufweist und welche mittels des Fortsatzes (16) des Zierelements (10) zumindest in Längsrichtung des Leistenabschnitts (11) bezüglich einer Referenz (48) der Kraftfahrzeugkarosserie (2) ausrichtbar ist.

9. Kraftfahrzeugkomponente (5) nach Anspruch 8, welche als Fahrzeugscheinwerfer (6) ausgebildet ist, wobei das Zierelement (10) unlösbar an einem Scheinwerfergehäuse (7) oder Scheinwerferglas (8) angeordnet ist.

10. Kraftfahrzeugkarosserie (2) mit einer ersten Kraftfahrzeugkomponente (5) nach Anspruch 8 oder 9 und mit einer zweiten Kraftfahrzeugkomponente (25), wobei die zweite Kraftfahrzeugkomponente (25) angrenzend an das Längsende (12) des Leistenabschnitts (11) des Zierelements (10) der ersten Kraftfahrzeugkomponente (5) angeordnet ist und in Endmontagestellung an der Kraftfahrzeugkarosserie (2) zumindest das freie Ende des Fortsatzes (16) des Zierelements (10) nach außen hin verdeckt.

11. Kraftfahrzeugkarosserie (2) nach Anspruch 10, wobei die zweite Kraftfahrzeugkomponente (25) ein Zierelement (30) aufweist, welches fluchtend zum Längsende (12) des Leistenabschnitts (11) des Zierelements (10) der ersten Kraftfahrzeugkomponente (5) angeordnet ist.

12. Kraftfahrzeugkarosserie (2) nach Anspruch 10 oder 11, wobei die zweite Kraftfahrzeugkomponente (25) oder deren Zierelement (30) eine Aufnahme (26) für den Fortsatz (16) des Zierelements (10) der ersten Kraftfahrzeugkomponente (5) aufweist.

13. Verfahren zur Montage einer Kraftfahrzeugkomponente (5) am Außenbereich einer Kraftfahrzeugkarosserie (2) gekennzeichnet mit den Schritten:
- Bereitstellen einer ersten Kraftfahrzeugkomponente (5) nach einem der vorhergehenden Ansprüche 10 oder 11,
- Ausrichten der Kraftfahrzeugkomponente (5) an der Kraftfahrzeugkarosserie (2) mittels einer Montagelehre (40) und unter Verwendung des Fortsatzes (16) des Zierelements (10) als Anlagereferenz und
- Befestigen der Kraftfahrzeugkomponente (5) an der Kraftfahrzeugkarosserie (2) mittels eines Befestigungselements (50).

## Claims

1. A decorative element (10) for fastening to a motor vehicle component (5) to be arranged on the exterior of a motor vehicle body (2), wherein the decorative element (10) has an elongated strip section (11) with a longitudinal end (12) and an outer side (14), wherein the outer side (14) is visible from the outside in the mounted position on the motor vehicle body (2), and wherein the longitudinal end (12) has an end face (15) with a longitudinally extending extension (16) which is set back from the outer side (14), **characterized in that** the decorative element (10) has a multi-component body (20) with a first component (21) and a second component (22), wherein the first component (21) comprises a first material and the second component (22) comprises a second material which differs from the first material, and wherein the first component (21) forms the outer side (14) of the decorative element (10), or wherein the second component (22) comprises or forms the extension (16).

2. The decorative element (10) according to claim 1, wherein the extension (16) protrudes from the end face (15) in the longitudinal direction of the strip section (11).

3. The decorative element (10) according to one of the preceding claims, wherein the extension (16) extends at a predetermined distance from the outer side (14) of the strip section (11).

4. The decorative element (10) according to one of the preceding claims, wherein the extension (16) has, at its end facing away from the end face (15) of the strip section (11), an end face (18) acting as a reference point.

5. The decorative element (10) according to one of the preceding claims, wherein the decorative element (10) comprises a plastic injection-molded component or is designed as a plastic injection-molded component.

6. A decorative element (10) according to one of the preceding claims, wherein the outer side (14) of the decorative element (10) or the strip section (11) is provided with a coating (19).

7. A decorative element (10) according to one of the preceding claims, wherein the extension (16) is uncoated.

8. A motor vehicle component (5) for arrangement and fastening on the exterior of a motor vehicle body (2), which has at least one decorative element (10) according to one of the preceding claims and which, by means of the extension (16) of the decorative element (10), can be aligned at least in the longitudinal direction of the strip section (11) with respect to a reference (48) of the motor vehicle body (2).

9. A motor vehicle component (5) according to claim 8, which is designed as a vehicle headlight (6), wherein the decorative element (10) is arranged non-detachably on a headlight housing (7) or headlight lens (8).

10. A motor vehicle body (2) comprising a first motor vehicle component (5) according to claim 8 or 9 and a second motor vehicle component (25), wherein the second motor vehicle component (25) is arranged adjacent to the longitudinal end (12) of the strip portion (11) of the decorative element (10) of the first motor vehicle component (5) and, in the final assembly position on the motor vehicle body (2), conceals at least the free end of the extension (16) of the decorative element (10) from the outside.

11. A motor vehicle body (2) according to claim 10, wherein the second motor vehicle component (25) has a decorative element (30) arranged in alignment with the longitudinal end (12) of the strip portion (11) of the decorative element (10) of the first motor vehicle component (5).

12. A motor vehicle body (2) according to claim 10 or 11, wherein the second motor vehicle component (25) or its decorative element (30) has a receptacle (26) for the extension (16) of the decorative element (10) of the first motor vehicle component (5).

13. A method for assembling a motor vehicle component (5) on the exterior of a motor vehicle body (2), **characterized by** the steps: - providing a first motor vehicle component (5) according to one of the preceding claims 10 or 11, - aligning the motor vehicle component (5) on the motor vehicle body (2) using an assembly jig (40) and using the extension (16) of the decorative element (10) as a reference, and - fastening the motor vehicle component (5) to the motor vehicle body (2) using a fastening element (50).

## Revendications

1. Élément décoratif (10) destiné à être fixé à un composant de véhicule automobile (5) destiné à être disposé à l'extérieur d'une carrosserie (2) de véhicule automobile. L'élément décoratif (10) présente une section de bande allongée (11) dotée d'une extrémité longitudinale (12) et d'une face extérieure (14), la face extérieure (14) étant visible de l'extérieur en position montée sur la carrosserie (2) du véhicule automobile. L'extrémité longitudinale (12) présente une face frontale (15) avec une extension longitudinale (16) en retrait par rapport à la face extérieure (14). L'élément décoratif (10) est **caractérisé en ce qu'**il présente un corps multicomposant (20) comprenant un premier composant (21) et un second composant (22), le premier composant (21) étant constitué d'un premier matériau et le second composant (22) d'un second matériau différent du premier, et le premier composant (21) formant la face extérieure (14) de l'élément décoratif (10), ou le second composant (22) comprenant ou forme l'extension (16).

2. Élément décoratif (10) selon la revendication 1, dans lequel l'extension (16) dépasse de la face frontale (15) dans le sens longitudinal de la section de bande (11).

3. Élément décoratif (10) selon l'une des revendications précédentes, dans lequel l'extension (16) s'étend à une distance prédéterminée du côté extérieur (14) de la section de bande (11).

4. Élément décoratif (10) selon l'une des revendications précédentes, dans lequel l'extension (16) présente, à son extrémité opposée à la face frontale (15) de la section de bande (11), une face frontale (18) servant de point de référence.

5. Élément décoratif (10) selon l'une des revendications précédentes, dans lequel l'élément décoratif (10) est constitué d'un composant en plastique moulé par injection ou est conçu comme tel.

6. Élément décoratif (10) selon l'une des revendications précédentes, dans lequel la face extérieure (14) de l'élément décoratif (10) ou de la bande (11) est pourvue d'un revêtement (19).

7. Élément décoratif (10) selon l'une des revendications précédentes, dans lequel l'extension (16) est non revêtue.

8. Composant automobile (5) destiné à être disposé et fixé à l'extérieur d'une carrosserie (2), comportant au moins un élément décoratif (10) selon l'une des revendications précédentes et pouvant être aligné, grâce à l'extension (16) de l'élément décoratif (10), au moins dans le sens longitudinal de la bande (11) par rapport à une référence (48) de la carrosserie (2).

9. Composant automobile (5) selon la revendication 8, conçu comme un phare de véhicule (6), l'élément décoratif (10) étant disposé de manière inamovible sur un boîtier de phare (7) ou une lentille de phare (8).

10. Carrosserie de véhicule automobile (2) comprenant un premier composant (5) selon la revendication 8 ou 9 et un second composant (25). Le second composant (25) est disposé à proximité de l'extrémité longitudinale (12) de la bande (11) de l'élément décoratif (10) du premier composant (5) et, en position de montage final sur la carrosserie (2), masque de l'extérieur au moins l'extrémité libre du prolongement (16) de l'élément décoratif (10).

11. Carrosserie de véhicule automobile (2) selon la revendication 10, dans laquelle le second composant (25) comporte un élément décoratif (30) aligné avec l'extrémité longitudinale (12) de la bande (11) de l'élément décoratif (10) du premier composant (5).

12. Carrosserie de véhicule automobile (2) selon la revendication 10 ou 11, dans laquelle le deuxième composant de véhicule automobile (25) ou son élément décoratif (30) comporte un logement (26) pour le prolongement (16) de l'élément décoratif (10) du premier composant de véhicule automobile (5).

13. Procédé d'assemblage d'un composant de véhicule automobile (5) sur l'extérieur d'une carrosserie de véhicule automobile (2), **caractérisé par** les étapes suivantes : - fourniture d'un premier composant de véhicule automobile (5) selon l'une des revendications 10 ou 11 précédentes ; - alignement du composant de véhicule automobile (5) sur la carrosserie de véhicule automobile (2) à l'aide d'un gabarit d'assemblage (40) et en utilisant le prolongement (16) de l'élément décoratif (10) comme référence ; et - fixation du composant de véhicule automobile (5) à la carrosserie de véhicule automobile (2) à l'aide d'un élément de fixation (50).
